# EUROPÄISCHE PATENTSCHRIFT

(11) **EP 3 967 191 B1**
(45) Veröffentlichungstag und Bekanntmachung des Hinweises auf die Patenterteilung: **13.05.2026**
(21) Anmeldenummer: 21193066.4
(22) Anmeldetag: 25.08.2021
(51) Int. Cl.: A47J 37/07, A47J 37/06

(54) **FEUERUNGSEINRICHTUNG FÜR DAS ZUBEREITEN, VORZUGSWEISE ZUM GRILLIEREN UND/ODER BACKEN, VON NAHRUNGSMITTELN**
FIRING DEVICE FOR THE PREPARATION, PREFERABLY FOR GRILLING AND / OR BAKING OF FOOD PRODUCTS
DISPOSITIF DE COMBUSTION DESTINÉ À LA PRÉPARATION, DE PRÉFÉRENCE À LA GRILLADE ET/OU À LA CUISSON DES ALIMENTS

(30) Priorität: 10.09.2020 CH 11392020
(43) Veröffentlichungstag der Anmeldung: 16.03.2022
(73) Patentinhaber: Leu, Benno, 6034 Inwil (CH)
(72) Erfinder: Leu, Benno, 6034 Inwil (CH)
(74) Vertreter: Luchs, Willi

(56) Entgegenhaltungen:
- WO-A1-2012/159131
- WO-A1-2019/104274
- DE-U1- 202012 103 349
- KR-A- 20160 085 119
- US-A1- 2016 227 965
- US-B2- 10 132 502
- US-B2- 10 524 616

## Beschreibung

Die Erfindung betrifft eine Feuerungseinrichtung vorzugsweise zum Grillieren, Kochen und/oder Backen von Nahrungsmitteln, nach dem Oberbegriff des Anspruchs 1.

Bei einer bekannten Einrichtung dieser eingangs erwähnten Gattung ist eine Feuerscheibe auf der Feuerschale mittig durch eine grosse Öffnung ausgespart, so dass die zum Grillieren bestimmte Heizfläche der Feuerscheibe durch eine Ringfläche gebildet ist. Die Öffnung dient dort auch zum Beschicken des Feuerraums mit Brennmaterial, Sie muss daher verhältnismässig gross bemessen sein. Darüberhinaus ist der Feuerboden ellipsoidal ausgeformt und ist daher beschränkt auf diese ringförmige Heizfläche zum Garen oder Grillieren von geeigneten Lebensmitteln, wie Fleisch oder Gemüse.

Die Druckschrift WO 2019/104274 offenbart eine aus einer Anzahl von Feuersteinen zusammengesetzte Feuerbox für einen Grill, welche die innere Umfangsfläche der Feuerbox bilden. Zudem weist sie unten einen Gitterrost und darunter einen grösseren Aschenbehälter auf. Ausserdem ist innenseitig ein Korb mit radialen und axialen Stäben versehen, der mit dem Gitterrost herausnehmbar aus dem inneren Hohlraum der Feuerbox angeordnet ist. Ferner ist eine Öffnung seitlich bei der Feuerbox vorgesehen, die zum Einführen von zusätzlichem Brennmaterial in die Feuerbox dient.

In der Druckschrift US 10,132,502 ist ein Grill offenbart, der eine Kochoberfläche auf der Oberseite einer Grillschale und einen darauf stellbaren ringförmigen Aufsatz mit Griffen aufweist. Bei der Kochoberfläche sind seitlich positionierte Brennstofföffnungen angeordnet und dazwischen ist diese pfannenartige Auflage platziert. Bei diesem wegnehmbaren Aufsatz ist eine seitliche Öffnung vorhanden, aber nicht in der Grillschale.

Der Erfindung liegt die Aufgabe zugrunde, eine Feuerungseinrichtung der eingangs genannten Art zu schaffen, die bei einem einfachen Aufbau multifunktional für verschiedene Zubereitungen, wie Grillen, Backen, Kochen etc. einsetzbar und dabei leicht zu bedienen ist.

Diese Aufgabe ist erfindungsgemäss, durch die Merkmale des Anspruchs 1 gelöst.

Der seitliche Zugang zum Feuerraum ermöglicht sowohl das bequeme Beschicken mit einer gewünschten Menge von Brennmaterial als auch das Einführen von Pizzas, Gebäcken und/oder anderen Nahrungsmittel mit oder ohne die einlegbare Platte aus Stein. Zudem kann das brennende Holz bzw. Kohle als Glut wie in einem Pizzaofen mittels eines Schiebers von aussen beliebig verschoben und nach Beenden der Feuerung kann die Asche durch diese seitliche Ausnehmung restlos entfernt werden.

Zusätzlich steht mit der oberen Heizscheibe eine grosse Grillfläche zur Verfügung, die mit demselben Feuer wie im Feuerraum geheizt wird und ein gleichzeitiges Zubereiten von Esswaren auf dieser Heizscheibe und im Feuerraum ermöglicht.

Nach Entfernen der in eine Öffnung in der Heizscheibe gelegte Abdeckplatte kann diese Feuerungseinrichtung ausserdem als Kochstelle für einen darauf stellbaren Kochtopf oder ähnliches benutzt werden.

Mit dieser einen oder mehreren Öffnungen mit oder ohne aufgelegte Abdeckplatte darauf kann die im Feuerraum erzeugte Hitze verändert bzw. gesteuert werden.

Zweckmässigerweise kann die Heizscheibe auch mit einer aussermittig angeordneten Öffnung zur Hitzeregulierung versehen sein, die mit einer Abdeckplatte schliessbar ist.

Sehr vorteilhaft sind in der Heizscheibe und in der wenigstens einen Abdeckplatte eine Anzahl von Durchlassöffnungen durch aneinandergereihte Längsschlitze über bestimmte Bereiche gebildet. Damit ergibt sich zum einen eine bessere Luftzirkulation für das Feuer im Feuerraum und zum andern kann das Grillgut an seiner Oberfläche mit den gewünschten Gitterstrukturen gegrillt werden.

Die Erfindung sieht ausserdem vor, dass die auf die Bodenplatte legbare Platte aus Stein, wie Cordierit oder Schamotte, hergestellt ist, die bei weggenommener Heizscheibe von oben eingelegt werden kann.

Sehr vorteilhaft ist auf der auf einem Standfuss stehenden Feuerschale oberseitig ein domförmiger Deckel aufsetzbar, welche zusammen im aufgesetzten Zustand des Deckels eine Aussenform einer antiken Vase, eines Pokals oder ähnlichem bilden.

Die Erfindung ist nachfolgend anhand eines Ausführungsbeispiels unter Bezugnahme auf die Zeichnung näher erläutert. Es zeigen:
- Fig. 1: eine perspektivische Vorderansicht einer erfindungsgemässen Feuerungseinrichtung mit aufgeklapptem Deckel;
- Fig. 2: die Feuerungseinrichtung nach Fig. 1 mit zugeklapptem Deckel, teilweise im Schnitt dargestellt;
- Fig. 3: eine schematische Vorderansicht der Feuerungseinrichtung nach Fig. 1 mit zugeklapptem Deckel;
- Fig. 4: eine perspektivische Seitenansicht einer Variante einer erfindungsgemässen Feuerungseinrichtung mit auf die Heizscheibe gelegter Abdeckplatte; und
- Fig. 5: eine perspektivische Vorderansicht einer erfindungsgemässen Feuerungseinrichtung mit aufgeklapptem Deckel.

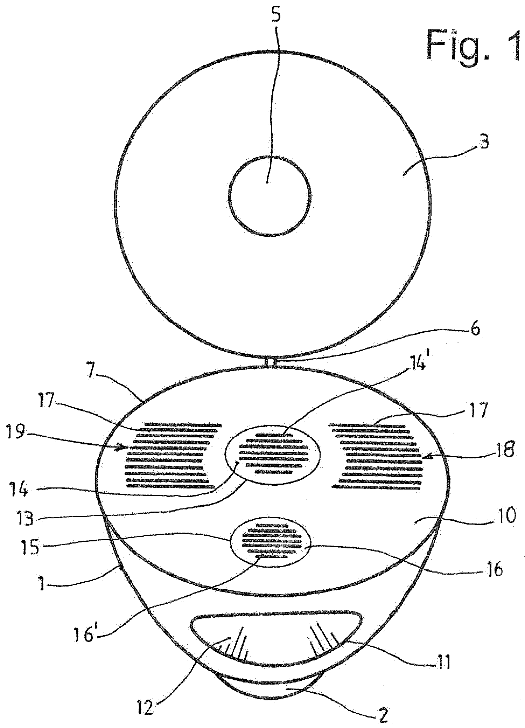

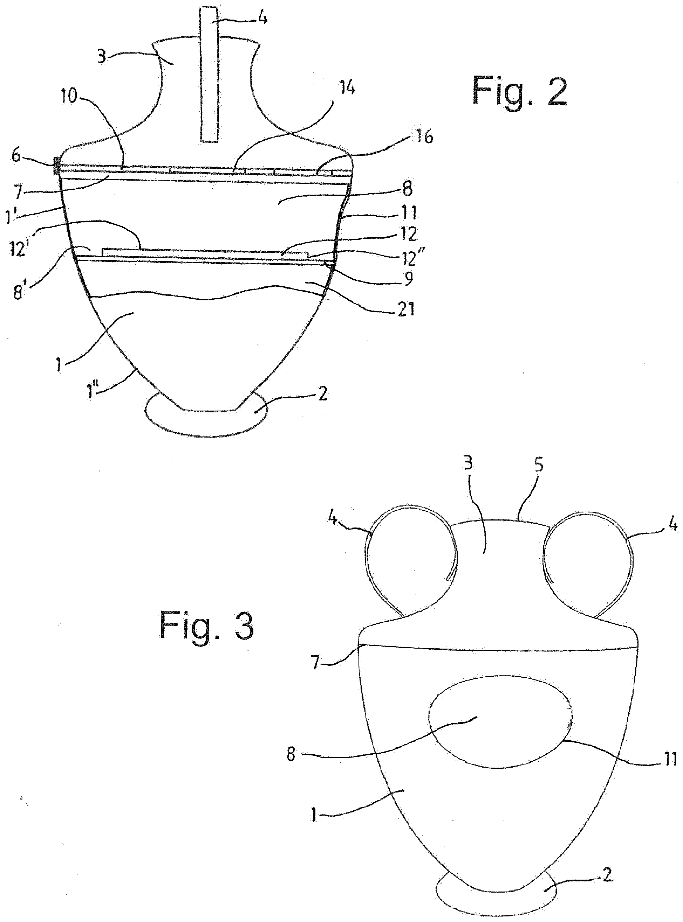

Die Feuerungseinrichtung nach Fig. 1 bis Fig. 3 ist mit einer Feuerschale 1 mit einem mit Brennmaterial, wie Holz, Kohle und/oder ähnlichem, beschickbaren Feuerraum 8 versehen. Dieser Feuerraum 8 ist zwischen einer in der Feuerschale 1 angeordneten Bodenplatte 9 und einer auf ihrem oberen Rand 7 befindlichen Heizscheibe 10 gebildet. Diese Feuerungseinrichtung dient zum Zubereiten von Nahrungsmitteln, insbesondere kann mit ihr grilliert, gegart, gekocht, gebacken oder dergleichen werden.

Diese Feuerungseinrichtung besteht aus einer topfförmigen Feuerschale 1 mit einem stabilen Standfuss 2 und einem domförmig ausgebildeten Deckel 3 mit zwei gegenüberliegenden Griffen 4 und einer Kaminöffnung 5. Der Deckel 3 ist mit einem Scharnier 6 am oberen Rand 7 der Feuerschale 1 aufklappbar angelenkt und sie bilden im aufgesetztem Zustand eine Aussenform einer antiken Vase oder eines Pokals. Die Feuerschale 1, der Deckel 3 wie auch die Bodenplatte 9 und die Heizscheibe 10 sind mit Vorteil aus Stahlblech hergestellt.

Die Feuerschale 1 weist vorzugsweise gegen unten eine nach innen verlaufende Kegelform 1" und zwischen der Bodenplatte 9 und ihrem oberen Rand 7 eine annähernd zylindrische Form 1' auf. Damit ergibt sich eine optimale Form des Feuerraums 8 hinsichtlich der Feuerung und der Beschickung des Brennmaterials.

Erfindungsgemäss befindet sich in der Feuerschale 1 ein in der oberen Hälfte angeordneter Feuerraum 8, der unten mit einer Bodenplatte 9 und oben mit einer Heizscheibe 10 für die Grillfunktion abgegrenzt ist. Die Feuerschale 1 ist dabei mit einer seitlichen Ausnehmung 11 zwischen der Bodenplatte 9 und der oberen Heizscheibe 10 versehen, durch welche der Feuerraum 8 mit Brennmaterial, wie Holz, Kohle und/oder ähnlichem beschickt bzw. nach dem Zubereiten das verbrannte Material herausgenommen werden kann. Diese frontseitig angeordnete Ausnehmung 11 ist ellipsenförmig ausgebildet, wobei ihre länglichere Seite zweckmässigerweise horizontal ausgerichtet ist. Sie dient auch beim Backvorgang zum Verschieben des brennenden Holzes bzw. der Kohle als Glut und damit des Feuers. Die Bodenplatte 9 ist vorzugsweise annähernd auf halber Höhe der Feuerschale 1 angeordnet und kann auf nicht gezeigten Stützelementen in dieser aufgelegt oder in ihr verschweisst bzw. fix verbunden sein.

Auf der Bodenplatte 9 ist erfindungsgemäss eine Platte 12 vorzugsweise aus einem Edelstein Kordierit einlegbar, die gegebenenfalls die Backfunktion der Feuerungseinrichtung übernimmt. Sie ist zweckmässigerweise so bemessen, dass sie bei weggenommener Heizscheibe 10 in die oben bis aussen zum Rand 7 offene Feuerschale eingelegt werden kann und mit einem kleineren Aussendurchmesser als die Bodenplatte 9 dimensioniert ist, so dass ein ring- oder ähnlich förmiger Raumspalt 8' zwischen der Aussenseite 12" der Platte und der Feuerschale 1 gebildet ist. Nach der Anfeuerung kann die entstehende Glut, die auf der scheibenförmigen Platte 12 befindlich ist, nach aussen in diesen Raumspalt 8' verschoben werden, damit die Pizzas oder ähnliche Nahrungsmitteln innen auf die Platte 12 eingeschoben und darauf von der Glut umgeben gebackt werden können.

Für die Kochfunktion ist in der Heizscheibe 10 eine mittig angeordnete Öffnung 13 als Feuerloch vorgesehen, die im Verhältnis zu deren Gesamtfläche der Heizscheibe 10 einen relativ kleinen Durchmesser aufweist und eine entfernbare Abdeckplatte 14 darauf als Abdeckung gelegt ist. Im Grillbetrieb ist diese Öffnung 13 normalerweise gedeckt und kann als Grillfläche benutzt werden. Für den Kochbetrieb ist sie dagegen offen und es kann ein Kochgerät, wie zum Beispiel eine Pfanne, ein Kochtopf, ein Wok oder dergleichen draufgestellt werden. Sonst dient sie im offenen oder geschlossenen Zustand zur Regulierung der im Feuerraum 8 entstehenden Backhitze.

In der Heizscheibe 10 ist vorteilhaft eine zusätzliche nahe beim Rand 7 angeordnete Öffnung 15 vorgesehen, die ebenfalls mit einer entfernbaren Abdeckplatte 16 verschliessbar und die so bemessen ist, dass sie im offenen Zustand nur nur sehr begrenzt die verfügbare Grillfläche der Heizscheibe reduziert. Diese Öffnung 15 dient aber nicht nur zur Hitzeregulierung, sondern auch zum Erzeugen eines Luftzugs für das Anfeuern im Feuerraum und während des Backens der Nahrungsmittel darin.

Auch die seitliche Ausnehmung 11 kann zur Hitzeregulierung durch Öffnen bzw. Schliessen derselben benutzt werden. Durch die annähernd ebene Ausbildung der Auflagefläche 12' der Bodenplatte 9 bzw. der Platte 12 ist die Hitze der Heizscheibe 10 mit einem Glutschieber regelbar, der auf ihr die Bildung von Hitzezonen ermöglicht.

In der Heizscheibe 10 und in den Abdeckplatten 14, 16 sind Durchlassöffnungen ausgebildet, die vorzugsweise durch aneinandergereihte Längsschlitze 17, 14', 16' über bestimmte Bereiche 18, 19 ausgebildet sind. Gemäss Fig. 1 sind diese Bereiche 18, 19 in der Heizscheibe 10 ausserhalb der mittigen Öffnung 13 beidseitig zu ihr durch parallel von innen nach aussen verlaufende Längsschlitze 17 gebildet. Sie sind so beabstandet, dass zwischen ihnen wie Stangen gebildet sind, mittels denen ein beim Grillieren als Grillrost-Effekt bekannter Goldbrand ermöglicht wird.

Es könnte sich aber auch um anders geformte Durchlassöffnungen handeln. Zum Beispiel könnte in einer der Abdeckplatten ein beliebiges Logo geformt sein.

Durch die Anordnung des Feuerraums 8 in der oberen Hälfte der Feuerschale 1 entsteht unterhalb der Bodenplatte 9 eine hinreichend grosse Isolierkammer 21'. Der Deckel 3 der Feuerschale kann für die Grillfunktion ganz entfernt werden. Beim Umstellen in der Backfunktion wird er dagegen draufgestellt und die Feuerschale somit zugedeckt.

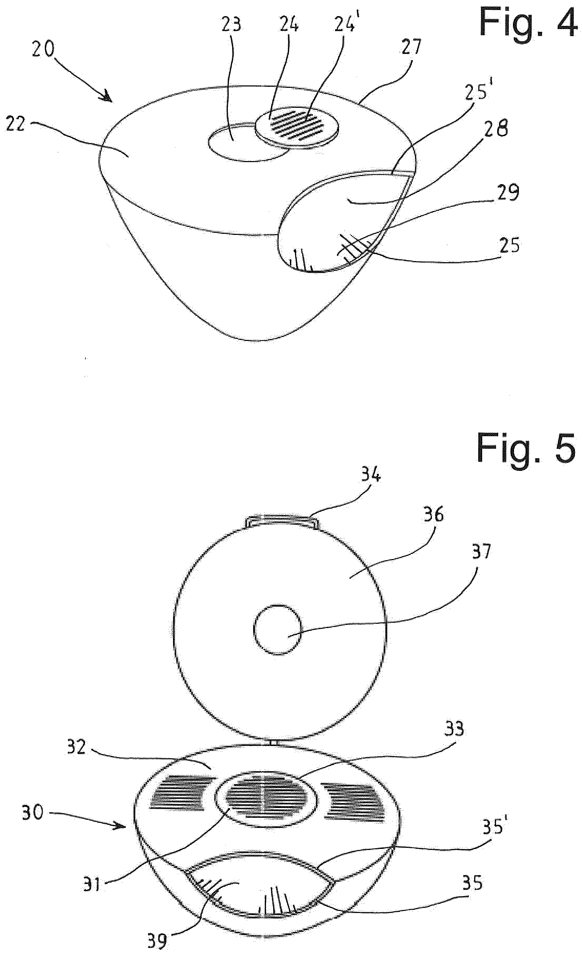

Fig. 4 zeigt eine Variante einer Feuerungseinrichtung, die an sich ähnlich wie diejenige nach Fig. 1 ausgestaltet ist und daher nurmehr die Unterschiede dargetan sind. Sie besteht aus einer topfförmigen Feuerschale 20 ohne oder mit einem Standfuss bzw. einem Deckel, die nicht gezeigt sind. Die Feuerschale 20 weist wie diejenige nach Fig. 1 eine gegen unten nach innen verlaufende Kegelform und zwischen einer eingelegten Bodenplatte 29 und ihrem oberen Rand 27 eine annähernd zylindrische Form auf. Damit ergibt sich ein optimaler Feuerraum 28 hinsichtlich der Feuerung und der Beschickung des Brennmaterials.

Erfindungsgemäss befindet sich in der Feuerschale 20 dieser in der oberen Hälfte angeordneter Feuerraum 28, der unten mit der Bodenplatte 29 und oben mit einer Heizscheibe 22 für die Grillfunktion abgegrenzt ist, und dabei sind anstelle nur einer Ausnehmung 11 die Feuerschale 20 und die Heizscheibe 22 mit korrespondierenden seitlichen Ausnehmungen 25, 25' versehen. Diese Ausnehmungen 25, 25' sind ähnlich einer Segmentform ausgeschnitten. Zudem kann auf diese Bodenplatte 29 ein hitzebeständiger Stein oder Keramik draufgelegt sein.

In der Heizscheibe 22 ist eine mittig angeordnete Öffnung 23 als Feuerloch vorgesehen, auf die eine Abdeckplatte 24 mit aneinandergereihten Längsschlitzen 24' legbar ist. Selbstverständlich können in der Heizscheibe 22 ebenso Längsschlitze und gegebenenfalls weitere Öffnungen vorgesehen sein.

Fig. 5 zeigt eine weitere Variante einer Feuerungseinrichtung, die wiederum ähnlich wie diejenige nach Fig. 1 bzw. Fig. 4 ausgestaltet ist und daher nurmehr die Unterschiede dargetan sind. Sie besteht aus einer halbkugelförmigen Feuerschale 30 ohne oder mit einem Standfuss und einem domförmig ausgebildeten Deckel 36 mit einem Griff 34 und einer Kaminöffnung 37.

Erfindungsgemäss befindet sich in der Feuerschale 30 dieser in der oberen Hälfte angeordneter Feuerraum, der unten mit der Bodenplatte 39 und oben mit einer Heizscheibe 32 für die Grillfunktion abgegrenzt ist, und dabei sind die Feuerschale 30 und die Heizscheibe 32 mit korrespondierenden seitlichen Ausnehmungen 35, 35' versehen. Diese Ausnehmungen 35, 35' bilden eine Segmentform und ihre Seitenränder sind kurvenförmig ausgeschnitten, könnten aber auch gerade, rund oder anders geformt sein. Die Seitenränder der Ausnehmungen 35, 35' sind einerseits bei der oberen Stirnseite der Feuerschale 30 und andererseits beim Aussenrand der Heizscheibe 32 ausgeschnitten.

Diese Feuerschalen 20, 30 wie auch die Bodenplatten 29, 39 und die Heizscheiben 22, 32 sind jeweils mit Vorteil aus Stahlblech hergestellt. Zudem kann auf diese Bodenplatte 39 ein hitzebeständiger Stein oder Keramik draufgelegt sein. Die Ausnehmungen könnten auch nur in den Feuerschalen 20, 30 ausgebildet sein, so wie beim Ausführungsbeispiel nach Fig. 1.

Die erfindungsgemässe Feuerungseinrichtung ist leicht transportabel und wird in der Regel draussen als Feuerstelle hingestellt. Sie zeichnet sich dadurch aus, dass sie multifunktional eine grossflächige Grillfläche bietet und zudem als Back- und Kocheinrichtung benutzt werden kann.

Die Erfindung ist mit dem oben erläuterten Ausführungsbeispiel ausreichend dargetan. Sie könnte aber noch durch ähnliche Varianten erläutert sein. So könnte diese Feuerungseinrichtung aus einer andern Aussenform als wie dargestellt bestehen und die Bodenplatte könnte einstückig aus Metall, aus einem Stein oder aus eine Verbund von diesen Materialien ausgestaltet sein. Der Deckel könnte auch ohne Scharnier aufsetzbar sein und wie erwähnt beim Grillieren weggenommen werden.

Diese Ausnehmung 11 könnte statt ellipsenförmig ebenso rund, vier- bzw. mehreckig, trapezförmig oder ähnlich ausgebildet sein. Es könnte auch mehr als eine seitliche Ausnehmung vorgesehen sein, zum Beispiel zwei gegenüberliegende, so dass der Feuerraum von zwei Seiten zugänglich wäre.

Die beim oberen Rand auf der Feuerschale befindliche ein- oder mehrteilige Heizscheibe kann auf die obere Stirnseite der Feuerschale aufgelegt sein oder aber innenseitig an ihr anliegen, so dass ihre obere Grillfläche bündig zu der oberen Stirnseite der Feuerschale verlaufen würde. Bei beiden Varianten könnte die Heizscheibe mit der Feuerschale vorzugsweise durch Schweissen verbunden sein. Es könnten auch innenseitig bei der Feuerschale Abstützelemente befestigt sein, auf welchen die Heizscheibe aufliegen würde.

Die Heizscheibe ist üblicherweise als ebene Fläche in horizontaler Ausrichtung ausgebildet. Sie kann aber statt als ebene Fläche auch leicht kegelförmig oder ähnlich mit einer leichten Neigung nach innen verlaufen, so dass das beim Grillieren oder Braten entstehende Öl oder dergleichen von selbst nach innen in die Feueröffnung der Scheibe fliesst. Diese Öffnung 15, 23, 33 ist jeweils im Zentrum der Heizscheibe vorgesehen. Sie kann aber auch versetzt dazu angeordnet sein.

## Patentansprüche

1. Feuerungseinrichtung zum Zubereiten, vorzugsweise zum Grillieren und/oder Backen von Nahrungsmitteln, mit einer Feuerschale (1, 20, 30) mit einem mit Brennmaterial, wie Holz, Kohle und/oder ähnlichem, beschickbaren Feuerraum (8, 28), wobei die Feuerschale (1, 20, 30) wenigstens eine seitliche Ausnehmung (11) für das Beschicken von Brennmaterial aufweist, wobei
der Feuerraum (8, 28) zwischen einer in der Feuerschale (1, 20, 30) angeordneten Bodenplatte (9, 29, 39) und einer im oberen Bereich, vorzugsweise beim oberen Rand der Feuerschale (1, 20, 30) befindlichen Heizscheibe (10, 22, 32) gebildet ist, wobei die seitliche Ausnehmung (11) zwischen der Bodenplatte (9, 29, 39) und der oberen Heizscheibe (10, 22, 32) versehen ist, durch die beim Backvorgang das brennende Brennmaterials verschiebbar ist, wobei die Bodenplatte (9, 29, 39) oder eine auf diese legbare Platte (12) aus einem hitzebeständigen Stein oder Keramik zum Backen von Nahrungsmitteln, wie Pizzas, Brot oder ähnlichem, mit einer Auflagefläche (12') ausgebildet ist.

2. Feuerungseinrichtung nach Anspruch 1, **dadurch gekennzeichnet, dass**
die Heizscheibe (10, 22, 32) im oberen Bereich der Feuerschale (1, 20, 30) mit mindestens einer Öffnung (13, 15, 23, 33) und darin jeweils einer aufsetzbaren Abdeckplatte (14, 16, 24, 31) für eine Temperatursteuerung des Feuerraums (8, 28) bei der Feuerung versehen ist.

3. Feuerungseinrichtung nach Anspruch 1 oder 2, **dadurch gekennzeichnet, dass**
Durchlassöffnungen in der Heizscheibe (10) und in der wenigstens einen Abdeckplatte (14, 16) durch aneinandergereihte Längsschlitze (17, 14', 16') über bestimmte Bereiche (18, 19) ausgebildet sind.

4. Feuerungseinrichtung nach Anspruch 3, **dadurch gekennzeichnet, dass**
anstelle der Abdeckplatte (14, 16, 24, 31) ein in die mindestens eine Öffnung (13, 15, 23, 33) ein Kochgerät, wie zum Beispiel eine Pfanne, ein Kochtopf, ein Wok oder dergleichen passend stellbar ist.

5. Feuerungseinrichtung nach einem der Ansprüche 1 bis 4, **dadurch gekennzeichnet**,
der Ausnehmung (11) frontseitg in der Feuerschale (1) ein Verschlusselement, zum Beispiel eine Türe, zugeordnet ist, das vorzugsweise mittels eines Scharniers schliessbar oder in die Ausnehmung (11) einschnappbar ist.

6. Feuerungseinrichtung nach einem der Ansprüche 1 bis 5, **dadurch gekennzeichnet, dass**
die auf die Bodenplatte (9, 29, 39) legbare scheibenförmige Platte (12) aus Stein, wie Cordierit oder Schamotte, hergestellt ist, die bei weggenommener Heizscheibe (10, 22, 32) von oben eingelegt werden kann.

7. Feuerungseinrichtung nach einem der Ansprüche 1 bis 6, **dadurch gekennzeichnet, dass**
die Platte (12) mit einem kleineren Aussendurchmesser als die Bodenplatte (9) dimensioniert ist, so dass ein ring- oder ähnlich förmiger Raumspalt (8') zwischen der Aussenseite (12") der Platte und der Feuerschale (1) gebildet ist, um die bei der Anfeuerung entstehende Glut, die auf der scheibenförmigen Platte (12) befindlich ist, nach aussen in diesen Raumspalt (8') zu verschieben.

8. Feuerungseinrichtung nach einem der Ansprüche 1 bis 7, **dadurch gekennzeichnet, dass**
die Bodenplatte (9, 29, 39) vorzugsweise annähernd auf halber Höhe der Feuerschale (1) platziert ist.

9. Feuerungseinrichtung nach einem der Ansprüche 1 bis 8, **dadurch gekennzeichnet, dass**
auf die auf einem Standfuss (2) stehende Feuerschale (1) oberseitig ein domförmiger Deckel (3) aufsetzbar ist, die zusammen im aufgesetzten Zustand des Deckels eine Aussenform ähnlich einer antiken Vase oder eines Pokals bilden.

10. Feuerungseinrichtung nach Anspruch 9, **dadurch gekennzeichnet, dass**
eine topfförmige Feuerschale (1) vorzugsweise gegen unten eine nach innen verlaufende Kegelform (1") und zwischen der Bodenplatte (9) und ihrem oberen Rand (7) eine annähernd zylindrische Form (1') aufweist.

11. Feuerungseinrichtung nach Anspruch 9 oder 10, **dadurch gekennzeichnet, dass**
der Deckel (3, 36) mit einer oberseitigen Kaminöffnung (5, 37) und vorzugsweise mit mindestens einem seitlichen Griff (4, 34) versehen ist, und zum Ein- und Ausschwenken mittels eines Scharniers (6) an der Feuerschale (1, 30) angelenkt ist.

12. Feuerungseinrichtung nach einem der Ansprüche 1 bis 11, **dadurch gekennzeichnet, dass**
die Feuerschale (20, 30) und die Heizscheibe (22, 32) mit korrespondierenden seitlichen Ausnehmungen (25, 25', 35, 35') versehen sind.

13. Feuerungseinrichtung nach Anspruch 12, **dadurch gekennzeichnet, dass**
diese in der Feuerschale (20, 30) und der Heizscheibe (22, 32) korrespondierenden Ausnehmungen (25, 25', 35, 35') eine Segmentform bilden und ihre Seitenränder bei der oberen Stirnseite der Feuerschale (20, 30) und beim Aussenrand der Heizscheibe (22, 32) kurvenförmig, gerade, rund oder anders geformt ausgeschnitten sind.

14. Feuerungseinrichtung nach einem der Ansprüche 1 bis 13, **dadurch gekennzeichnet, dass**
die Feuerschale (1, 20, 30), die Bodenplatte (9, 29, 39) und die Heizscheibe (10, 22, 32) aus Metall, vorzugsweise Stahlblech, hergestellt sind.

## Claims

1. Firing device for the preparation, preferably for grilling and/or baking, food products, comprising a fire bowl (1, 20, 30) with a combustion chamber (8, 28), into which combustible material, such as wood, coal and/or the like, can be fed, wherein the fire bowl (1, 20, 30) has at least one lateral recess (11) for feeding in combustible material, **characterized in that**
the combustion chamber (8, 28) is formed between a base plate (9, 29, 39) arranged in the fire bowl (1, 20, 30) and a heating disc (10, 22, 32) located in the upper area, preferably at the upper edge of the fire bowl (1, 20, 30), wherein the lateral recess (11) is provided between the base plate (9, 29, 39) and the upper heating plate (10, 22, 32), through which the burning combustible material can be moved during the baking process, wherein the base plate (9, 29, 39) or a plate (12) which can be placed thereon is made of heat-resistant stone or ceramic for baking food products, such as pizzas, bread or the like, and is formed with a bearing surface (12').

2. Firing device according to claim 1, **characterized in that** the heating disc (10, 22, 32) in the upper region of the fire bowl (1, 20, 30) is provided with at least one opening (13, 15, 23, 33) and in it in each case a cover plate (14, 16, 24, 31), which can be placed over them for a temperature control of the combustion chamber (8, 28) during firing.

3. Firing device according to claim 1 or 2, **characterized in that** passage openings in the heating disc (10) and in the at least one cover plate (14, 16) are formed by longitudinal slots (17, 14', 16') arranged in a row over specific areas (18, 19).

4. Firing device according to claim 3, **characterized in that** instead of the cover plate (14, 16, 24, 31), a cooking utensil, such as a frying pan, a saucepan, a wok or the like, can be fitted into the at least one opening (13, 15, 23, 33).

5. Firing device according to any one of the claims 1 to 4, **characterized in that**
a closure element, for example a door, is associated with the recess (11) at the front of the fire bowl (1), which closure element is preferably closable by means of a hinge or snap-fit into the recess (11).

6. Firing device according to any one of the claims 1 to 5, **characterized in that**
the disc-shaped plate (12), which can be placed on the base plate (9, 29, 39), is made of stone, such as cordierite or fireclay, and can be inserted from above when the heating disc (10, 22, 32) has been removed.

7. Firing device according to any one of the claims 1 to 6, **characterized in that**
the plate (12) is dimensioned with a smaller outer diameter than the base plate (9), so that a ring-shaped or similar space gap (8') is situated between the outer edge (12") of the plate and the fire bowl (1) is formed in order to displace the embers generated during ignition, which are located on the disc-shaped plate (12), outwards into this space gap (8').

8. Firing device according to any one of the claims 1 to 7, **characterized in that**
the base plate (9, 29, 39) is preferably positioned approximately halfway up the fire bowl (1).

9. Firing device according to any one of the claims 1 to 8, **characterized in that**
a dome-shaped lid (3) can be placed on top of the fire bowl (1) standing on a base (2), which together, when the lid is in place, form an external shape similar to an antique vase or a goblet.

10. Firing device according to claim 9, **characterized in that** a pot-shaped fire bowl (1) preferably has an inwardly tapering conical shape (1'") towards the bottom and an approximately cylindrical shape (1') between the base plate (9) and its upper rim (7).

11. Firing device according to claim 9 or 10, **characterized in that** the lid (3, 36) is provided with an upper chimney opening (5, 37) and preferably with at least one side handle (4, 34), and is hinged to the fire bowl (1, 30) by means of a hinge (6) for swivelling in and out.

12. Firing device according to any one of the claims 1 to 11, **characterized in that**
the fire bowl (20, 30) and the heating disc (22, 32) are provided with corresponding lateral recesses (25, 25', 35, 35').

13. Firing device according to claim 12, **characterized in that** these corresponding recesses (25, 25', 35, 35') in the fire bowl (20, 30) and the heating disc (22, 32) form a segment shape and their side edges are cut out in a curved, straight, round or otherwise shaped manner at the upper end face of the fire bowl (20, 30) and at the outer edge of the heating disc (22, 32).

14. Firing device according to any one of the claims 1 to 13, **characterized in that**
the fire bowl (1, 20, 30), the base plate (9, 29, 39) and the heating disc (10, 22, 32) are made of metal, preferably sheet steel.

## Revendications

1. Dispositif de combustion pour préparer, de préférence pour griller et/ou cuire des aliments, avec une cuve (1, 20, 30) avec une chambre de combustion (8, 28) pouvant être chargée en combustible, tel que du bois, du charbon et/ou similaire, dans lequel la cuve (1, 20, 30) présente au moins un évidement latéral (11) pour le chargement de combustible, dans lequel
la chambre de combustion (8, 28) est formée entre une plaque de fond (9, 29, 39) disposée dans la cuve (1, 20, 30) et un disque chauffant (10, 22, 32) se trouvant dans la zone supérieure, de préférence auprès du bord supérieur de la cuve (1, 20, 30), dans lequel l'évidement latéral (11) est prévu entre la plaque de fond (9, 29, 39) et le disque chauffant supérieur (10, 22, 32), qui permet de faire coulisser le combustible ardent lors de l'opération de cuisson, dans lequel la plaque de fond (9, 29, 39) ou une plaque (12) pouvant être posée dessus en pierre résistante à la chaleur ou en céramique est réalisée avec une surface d'appui (12') pour la cuisson d'aliments, tels que des pizzas, du pain ou similaires.

2. Dispositif de combustion selon la revendication 1, **caractérisé en ce que**
le disque chauffant (10, 22, 32) est pourvu dans la zone supérieure de la cuve (1, 20, 30) d'au moins une ouverture (13, 15, 23, 33) et, dans celle-ci, d'une plaque de recouvrement (14, 16, 24, 31) pouvant être placée pour une commande de température de la chambre de combustion (8, 28) lors de la combustion.

3. Dispositif de combustion selon la revendication 1 ou 2, **caractérisé en ce que**
des ouvertures de passage sont réalisées dans le disque chauffant (10) et dans l'au moins une plaque de recouvrement (14, 16) par des entailles longitudinales (17, 14', 16') alignées sur certaines zones (18, 19).

4. Dispositif de combustion selon la revendication 3, **caractérisé en ce que**
peut être placé de manière adaptée, à la place de la plaque de recouvrement (14, 16, 24, 31) dans l'au moins une ouverture (13, 15, 23, 33) un appareil de cuisson, tel qu'une poêle, une casserole, un wok ou similaire.

5. Dispositif de combustion selon l'une quelconque des revendications 1 à 4, **caractérisé en ce que**
un élément de fermeture, par exemple une porte, qui de préférence peut être fermée au moyen d'une charnière ou peut être encliquetée dans l'évidement (11), est associé à l'évidement (11) sur le côté avant dans la cuve (1).

6. Dispositif de combustion selon l'une quelconque des revendications 1 à 5, **caractérisé en ce que**
la plaque en forme de disque (12) en pierre, telle que la cordiérite ou la chamotte, pouvant être posée sur la plaque de fond (9, 29, 39), peut être mise en place par le haut lorsque le disque chauffant (10, 22, 32) est retiré.

7. Dispositif de combustion selon l'une quelconque des revendications 1 à 6, **caractérisé en ce que**
la plaque (12) est dimensionnée avec un diamètre extérieur plus petit que la plaque de fond (9) de telle sorte qu'une fente spatiale (8') annulaire ou de forme similaire est formée entre le côté extérieur (12") de la plaque et la cuve (1) pour faire coulisser vers l'extérieur dans ladite fente spatiale (8') les braises générées lors de l'allumage qui se trouvent sur la plaque en forme de disque (12).

8. Dispositif de combustion selon l'une quelconque des revendications 1 à 7, **caractérisé en ce que**
la plaque de fond (9, 29, 39) est de préférence placée à peu près à mi-hauteur de la cuve (1).

9. Dispositif de combustion selon l'une quelconque des revendications 1 à 8, **caractérisé en ce que**
un couvercle en forme de dôme (3) peut être placé côté supérieur sur la cuve (1) se trouvant sur un pied (2), lesquels forment ensemble, lorsque le couvercle est posé, une forme extérieure semblable à un vase ou une coupe antique.

10. Dispositif de combustion selon la revendication 9, **caractérisé en ce que**
une cuve (1) en forme de pot présente de préférence une forme conique (1") s'étendant vers l'intérieur vers le bas et une forme approximativement cylindrique (1') entre la plaque de fond (9) et son bord supérieur (7).

11. Dispositif de combustion selon la revendication 9 ou 10, **caractérisé en ce que**
le couvercle (3, 36) est pourvu d'une ouverture de cheminée (5, 37) côté supérieur et de préférence d'au moins une poignée (4, 34) latérale, et est articulé au moyen d'une charnière (6) sur la cuve (1, 30) pour le pivotement l'intérieur et l'extérieur.

12. Dispositif de combustion selon l'une quelconque des revendications 1 à 11, **caractérisé en ce que**
la cuve (20, 30) et le disque chauffant (22, 32) sont pourvus d'évidements latéraux (25, 25', 35, 35') correspondants.

13. Dispositif de combustion selon la revendication 12, **caractérisé en ce que**
lesdits évidements (25, 25', 35, 35') correspondants dans la cuve (20, 30) et le disque chauffant (22, 32) forment une forme de segment et leurs bords latéraux à proximité du côté frontal supérieur de la cuve (20, 30) et du bord extérieur du disque chauffant (22, 32) sont découpés de manière curviligne, rectiligne, ronde ou avec une forme différente.

14. Dispositif de combustion selon l'une quelconque des revendications 1 à 13, **caractérisé en ce que**
la cuve (1, 20, 30), la plaque de fond (9, 29, 39) et le disque chauffant (10, 22, 32) sont fabriqués à partir de métal, de préférence de tôle d'acier.
